# EUROPEAN PATENT SPECIFICATION

(11) **EP 2 374 686 B1**
(45) Date of publication and mention of the grant of the patent: **24.08.2016**
(21) Application number: 09830223.5
(22) Date of filing: 04.12.2009
(51) Int. Cl.: B61K 13/00, G01M 17/08, B61F 9/00, G01M 17/10

(54) **METHOD OF DETECTING WARNING SIGN OF DERAILMENT**
VERFAHREN ZUR ERKENNUNG EINES WARNSIGNALS FÜR ENTGLEISUNG
PROCÉDÉ POUR DÉTECTER UN SIGNAL D'AVERTISSEMENT DE DÉRAILLEMENT

(30) Priority: 05.12.2008 JP 2008310706
(43) Date of publication of application: 12.10.2011
(73) Proprietor: WEST JAPAN RAILWAY COMPANY, Osaka-shi, Osaka 530-8341 (JP); Akebono Brake Industry Co., Ltd., Tokyo 103-8534 (JP); The University of Tokyo, Bunkyo-ku, Tokyo 113-8654 (JP)
(72) Inventor: TANAKA, Fumio, Osaka-shi Osaka 530-8341 (JP); YAMASHITA, Takayoshi, Osaka-shi Osaka 530-8341 (JP); MORIKAWA, Masato, Osaka-shi Osaka 530-8341 (JP); KAWANABE, Tetsuya, Tokyo 103-8534 (JP); SAKAI, Takashi, Tokyo 103-8534 (JP); KUNIMI, Takashi, Tokyo 103-8534 (JP); SUDA, Yoshihiro, Tokyo 113-8654 (JP); HUNG, Chieh-jen, Tokyo 153-8505 (JP); LIN, Shihpin, Tokyo 153-8505 (JP); WANG, Wen-jun, Tokyo 152-8505 (JP)
(74) Representative: Ipside
(86) International application number: PCT/JP2009/006651
(87) International publication number: WO 2010/064453

(56) References cited:
- WO-A1-00/09379
- JP-A- 10 271 604
- JP-A- 2000 006 807
- JP-A- 2002 211 400
- JP-A- 2004 175 156
- JP-A- 2006 341 659
- US-A- 3 921 945
- US-A1- 2002 077 733

## Description

### TECHNICAL FIELD

Present invention relates to a method to detect and so warning of a potential derailment thus preventing an actual derailment from happening.

### BACKGROUND ART

A serious accident will occur when a railroad carriage continues to run without detecting a derailment. Then, the methods to detect derailment are suggested in US2002/077733 and US3921945.

One method is to integrate a double acceleration signal and measure the quantity of displacement of the top and bottom direction, simultaneously detect the run speed of the carriage, and detect derailment based on the acceleration of the vertical direction corresponding to the actual run speed.

Another method is to watch and record an output of a vibration sensor when the carriage runs normally, and detect derailment by comparing the real time output of the vibration sensor with the record.

Another method is is to detect a run speed of a railroad carriage and an acceleration vibration simultaneously, measure the rate of change in acceleration vibration with run speed, and assume the maximum acceleration vibration is a limit value, then judge the derailment to be when the acceleration vibration detected is more than the limit value.

Another method is is to filter an output of the top and bottom direction of the acceleration sensor in the predetermined range, and determine whether it did or did not derail by comparing the filtered value with the reference value of the low-speed run.

### Further prior ART

### PATENTED DOCUMENTS

[Prior art 1] Japanese Laid Open Patent Publication (tokkai) Heisei 09-039790
[Prior art 2] Japanese Laid Open Patent Publication (tokkai) Heisei 10-278795
[Prior art 3] WO 2000/09379
[Prior art 4] Japanese Laid Open Patent Publication (tokkai) 2003-261027

### DISCLOSURE OF THE INVENTION

### OBJECT OF THE INVENTION

Any method disclosed in Prior art 1- 4 is a method to detect a derailment after it has happened, they do not prevent derailment.

### MEANS OF SOLVING THE PROBLEM

In order to solve the above-mentioned problems, a method to detect a potential for derailment identified with claim 1 is as follows.

Detect a pitch angle velocity and a roll angle velocity of a running chassis by a sensor (an acceleration sensor or an angular velocity sensor) attached to the frame of the chassis, and determine a potential for derailment when multiplication value of the pitch angular velocity of the chassis is larger than the threshold set beforehand, and when multiplication value of the roll angular velocity of the chassis is larger than the threshold set beforehand.

The sensor described in the claim may be attached to a journal box and a chassis frame.

It is preferable to attach a plurality of sensors to the chassis to improve detection precision, in this case, adopt the maximum of the detection value of a plurality of sensors to enhance safety. And it is possible to change the threshold of the pitch angular velocity and the multiplication threshold of the roll angular velocity of the chassis as a parameter of the run speed.

A simulation apparatus for the reproduction of derailment may be built including a movable unit which is provided between a pair of rails, the movable unit can move in a direction at right angles to the rail, a plurality of movable units continue along the run direction of the vehicle, the movable unit has a guide surface and a step side, a part of the running vehicle comes into contact with the guide surface, the vehicle moves at right angles to the rail, a flange on the wheel runs onto the step side when the movable unit comes close to the rail.

### EFFECT OF THE INVENTION

The present invention makes it possible to prevent derailment even on a low-speed run, so it is not necessary to repair damage to either the vehicle or the track.

Also, with reference to controlling the operation of the vehicle, it is possible to identify a dangerous state beforehand, thus, it can perform an efficient operation.

### SIMPLE EXPLANATION OF THE DRAWINGS

[FIG. 1] A plane view of the experimental vehicle which applies a method to detect the potential for derailment of the present invention.
[FIG. 2] A plane view of an experimental section causing a derailment.
[FIG. 3] A side view of FIG. 2.
[FIG. 4] A front view of the movable unit which is used in an experiment.
[FIG. 5] A plane view like FIG. 2 showing the conditions when the movable unit is moved.
[FIG. 6]
   (a) A graph showing a change in acceleration over time, the acceleration is measured by an acceleration sensor attached to the journal box on the left hand side of the first axle of the experimental vehicle.
   (b) A graph showing a change in acceleration over time, the acceleration is measured by an acceleration sensor attached to the journal box on the left hand side of the third axle of the experimental vehicle.
   (c) A graph showing a change in the roll angular velocity over time, the roll angular velocity is measured by an angular velocity sensor attached to the front part of the first bogey frame of the experimental vehicle.
   (d) A graph showing a change in the roll angular velocity over time, the roll angular velocity is measured by an angular velocity sensor attached to the rear of the second bogey frame of the experimental vehicle.
   (e) A graph showing a change in the roll angular velocity over time, the roll angular velocity is measured by an angular velocity sensor attached to the front part of the body of the experimental vehicle.
   (f) A graph showing a change in the pitch angular velocity over time, the pitch angular velocity is measured by an angular velocity sensor attached to the front part of the first bogey frame of the experimental vehicle.
   (g) A graph showing a change in the pitch angular velocity over time, the pitch angular velocity is measured by an angular velocity sensor attached towards the rear of the second bogey frame of the experimental vehicle.
   (h) A graph showing a change in the pitch angular velocity over time, the pitch angular velocity is measured by an angular velocity sensor attached to the body of the experimental vehicle.

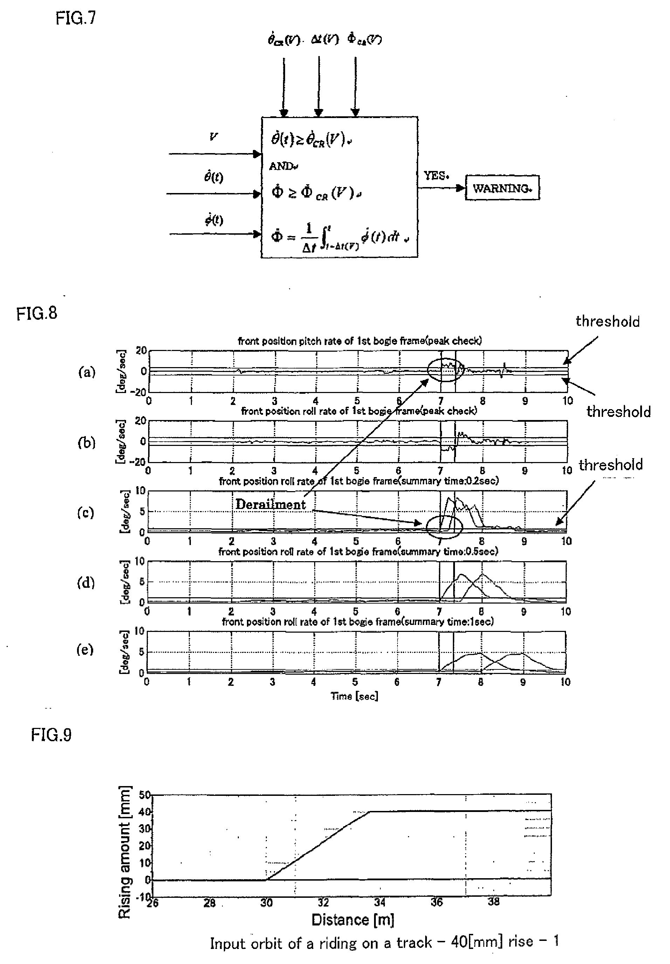

[FIG. 7] A flow chart of an algorithm.
[FIG. 8]
   (a) A graph showing a timely change (a peak check) of the pitch angular velocity of the front part of the first bogey frame of the experimental vehicle.
   (b) A graph showing a timely change of the roll angular velocity of the front part of the first bogey frame of the experimental vehicle.
   (c) A graph showing a multiplication value (0.2 seconds) of the roll angular velocity of the front part of the first bogey frame of the experimental vehicle.
   (d) A graph showing a multiplication value (0.5 seconds) of the roll angular velocity of the front part of the first bogey frame of the experimental vehicle.
   (e) A graph showing a multiplication value (1.0 seconds) of the roll angular velocity of the front part of the first bogey frame of the experimental vehicle.
[FIG. 9] A figure showing the input example of the orbit of a riding on a track (1 rotation).

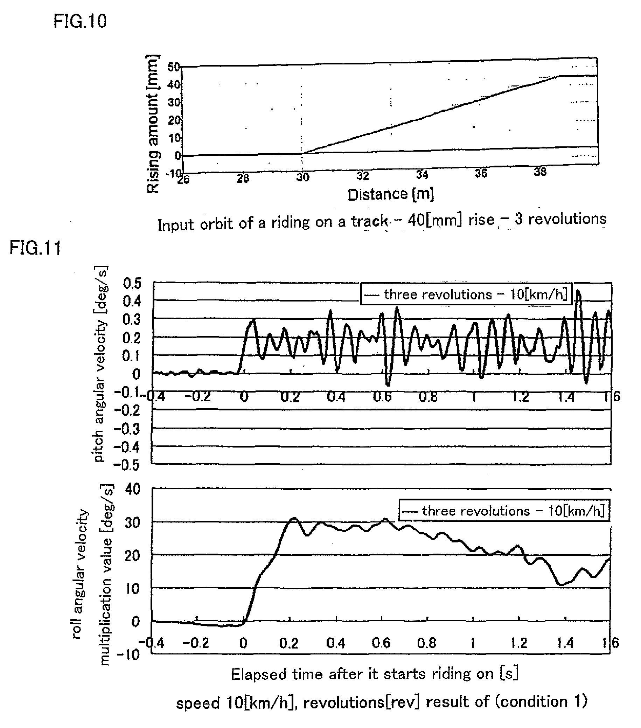

[FIG. 10] A figure showing the input example of the orbit of a riding on a track (3 rotations).
[FIG. 11] A graph showing the relations between pitch angular velocity and roll angular velocity multiplication value and elapsed time after it starts riding on a track at 10km/hr.

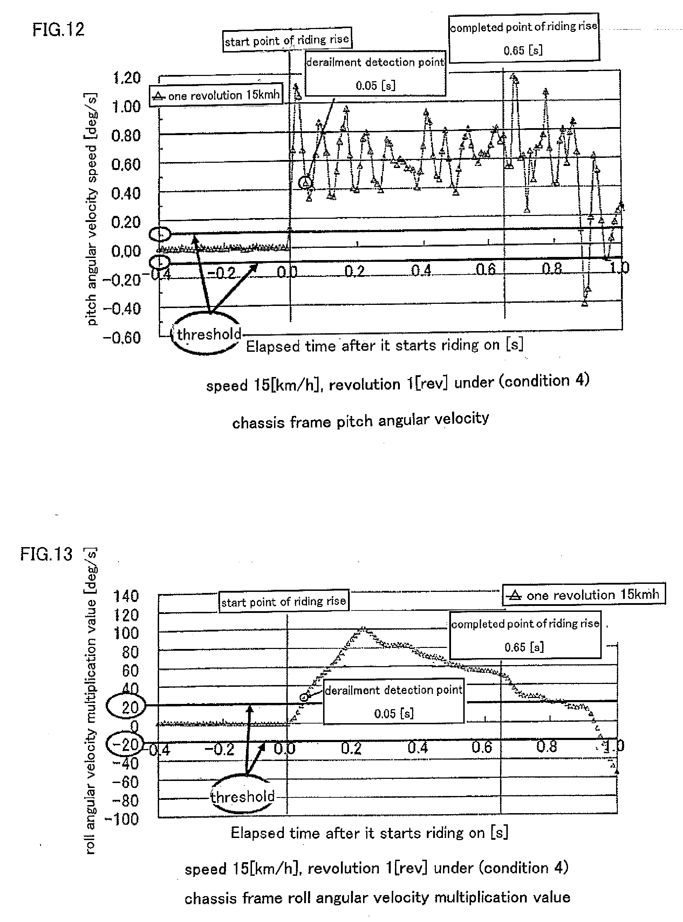

[FIG. 12] A graph showing the relations between threshold of pitch angular velocity and elapsed time after it starts riding on a track at 15km/hr.
[FIG. 13] A graph showing the relations between threshold of multiplication value of the roll angular velocity and elapsed time after it starts riding on a track at 15km/hr.

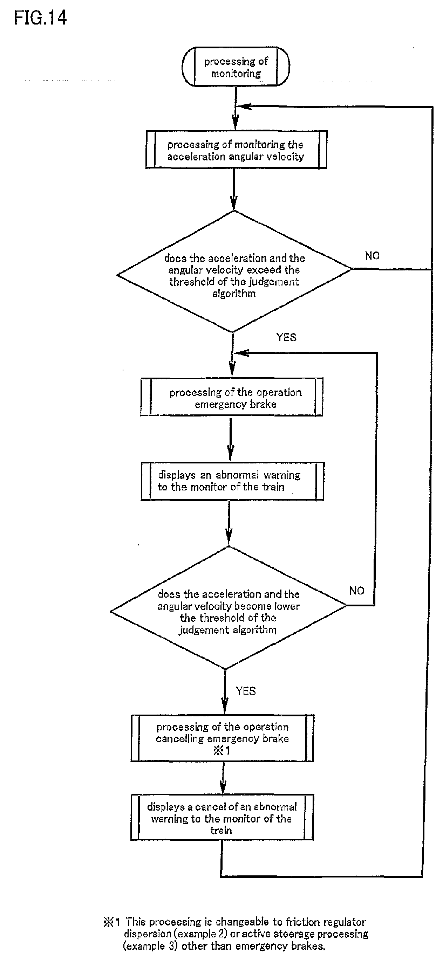

[FIG. 14] A flow diagram of a method to detect the potential for derailment of the present invention.

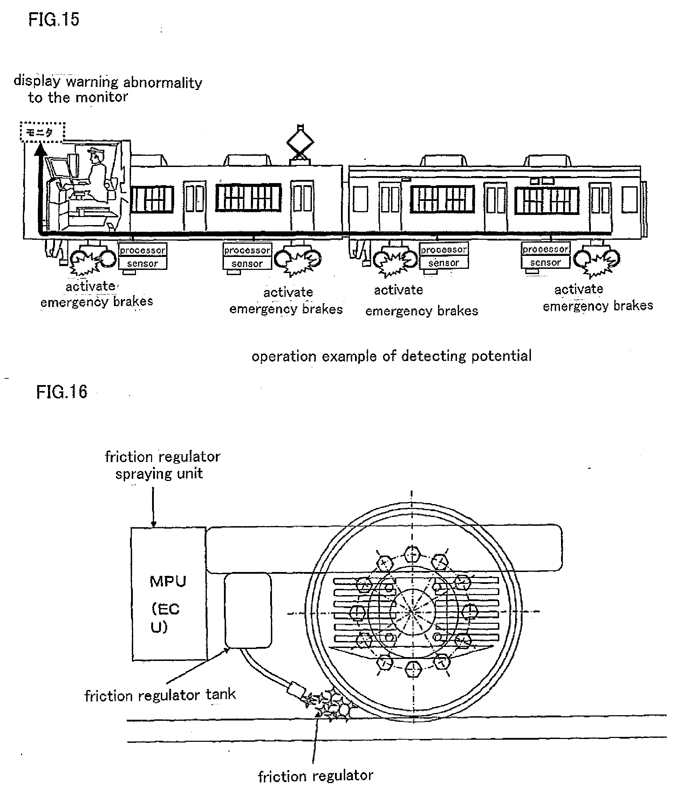

[FIG. 15] A figure showing an example of a display which performs a warning of the abnormality to a train monitor.
[FIG. 16] A figure showing an example of spraying a friction regulator between a rail and the wheels.

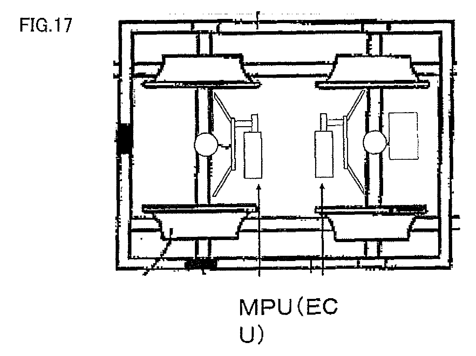

[FIG. 17] A figure showing an example of performing active steerage using MPU.

### PREFERRED EMBODIMENT OF THE INVENTION

Best embodiment of the present invention is explained by the attached drawings.

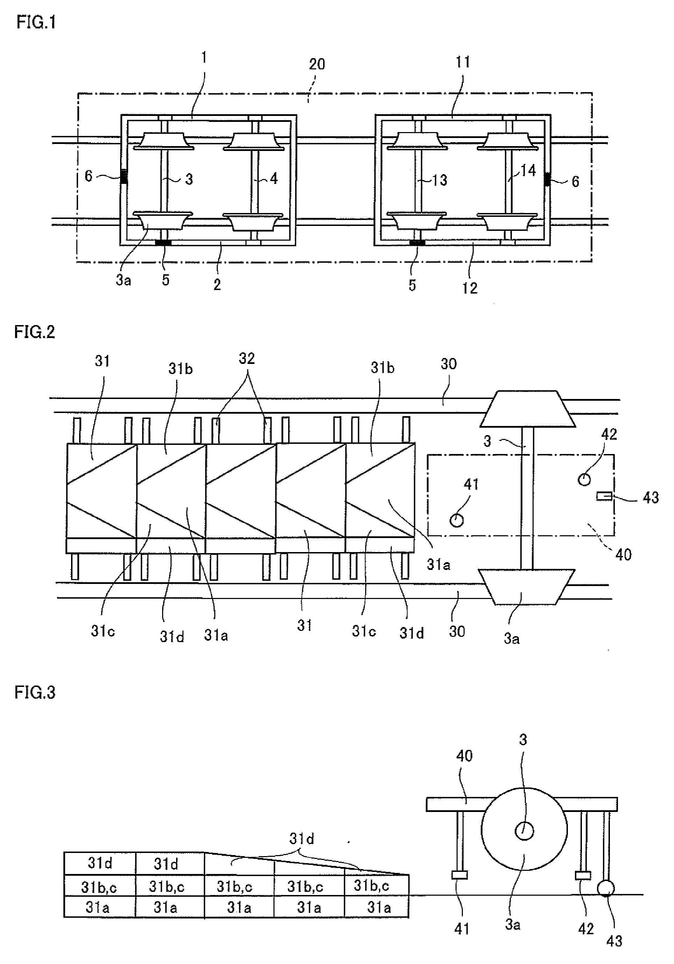

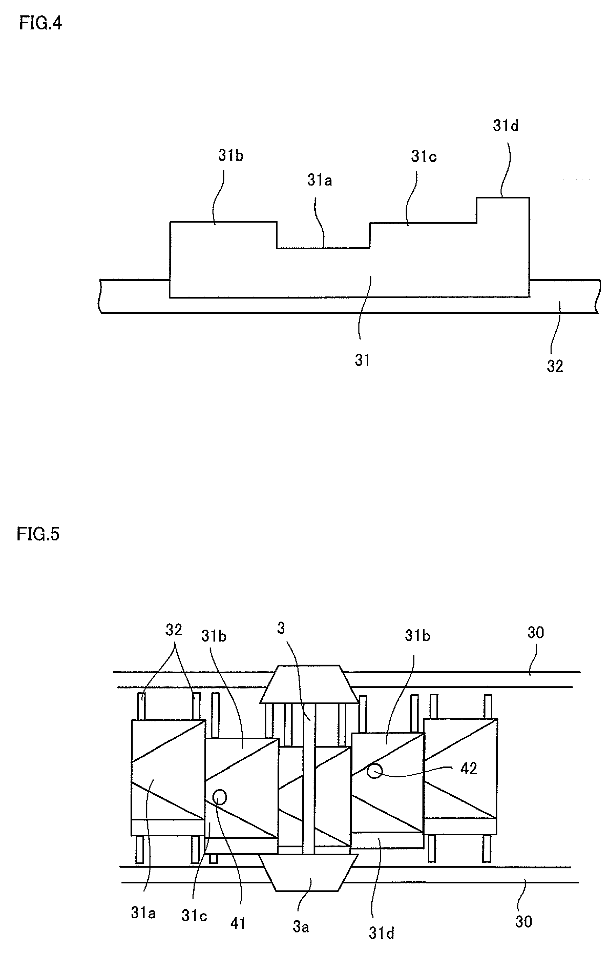

FIG. 1 is a plane view of the experimental vehicle which applies a method to detect the potential for derailment of the present invention, FIG. 2 is a plane view of an experimental section causing derailment, FIG. 3 is a side view of FIG. 2, FIG. 4 is a front view of the movable unit which is used in an experiment, FIG. 5 is a plane view like FIG. 2 in the conditions when the movable unit is moved.

A model of 1/10 scale is used as an experimental vehicle, in this experimental vehicle, a body 20 is supported with front chassis 1 and rear chassis 11.

In the front chassis 1, the first axle 3 and the second axle 4 are provided to the bogey frame 2, in the rear chassis 11, the third axle 13 and the fourth axle 14 are provided to the bogey frame 12.

And, an acceleration sensor 5 is attached to a journal box on the left hand side of the first axle 3 and the left hand side of the third axle 13, as describe below, a movable unit rides onto this side. An angular velocity sensor 6 is attached to the front end of the bogey frame 2, the rear end of the bogey frame 12 and the front end of the body 20. The angular velocity sensor 6 comprises a roll angular velocity sensor and a pitch angular velocity sensor.

An approximately 9m length of straight line track is used as an experimental section. A plurality of movable units 31 are provided between rails 30, 30 comprising the straight line track.

The movable unit 31 has a block shape, and the movable unit 31 engages linear slide 32 movably, the linear slide 32 is at right angles to the rail 30.

As shown in Fig 4, a plurality of step surfaces are formed on movable unit 31.

Step surface 31 a is the lowest, step surface 31 b and step surface 31 c are the same height, these step surfaces 31 b, 31 c are separated in the widthwise direction of the track, and the highest step surface 31 d is formed on the step surface 31 c.

And as shown in Fig 5, the boundary wall with step surface 31 a and step surface 31b, 31c is formed diagonally to gradually come close to each other along the line of the vehicle.

Also, the step surfaces 31d rise in succession along the line of the vehicle. That is, regarding three movable units 31 of the upstream (the right side in the Fig 3), the step surfaces 31 d are formed of an inclined surface to gradually rise in succession.

Note that it is preferable to prepare several kinds of movable units 31 to make it possible to change the angle of the inclined surface of step surface 31d depending on the number of wheel rotation before reaching the determined wheel rise quantity.

Also, the experimental device comprises draw unit 40 pulling a vehicle. The draw unit 40 has small rollers 41, 42 and caster 43, the small rollers 41, 42 move the movable unit 31 along linear slide 32, the caster 43 improves the stiffness of the draw unit 40.

In the above, when the vehicle is pulled by draw unit 40 from a state of FIG. 2, then the small roller 41 of the draw unit 40 abuts with a boundary wall with the step surface 31a and step surface 31c of first movable unit 31 (in a figure mostly the right side), and the movable unit 31 moves to the one rail 30 side.

By this movement, a flange on the left side wheel 3a attached to first axle 3 of anterior chassis 1 rides onto the step surface 31 d of the first movable unit 31.

Further still, when the vehicle is pulled, the small roller 41 abuts with a boundary wall with the step surface 31a and step surface 31c of the second movable unit 31, the movable unit 31 moves to the one rail 30 side, like the above, a flange on the left side wheel 3a attached to the first axle 3 rides onto the step surface 31d of the second movable unit 31.

On the other hand, regarding the movable unit 31 having step surface 31d which the flange of wheel 3a passed, the following small roller 42 abuts with a boundary wall with step surface 31a and step surface 31 b of movable unit 31, the movable unit 31 returns to the original position, and It prepares for the passage of the following wheel. Fig. 5 shows this state.

As mentioned above, when the one side wheel being attached to an axle rides onto an obstacle (the movable unit), and runs with the flange, the one side wheel is lifted, the chassis is slanted, and finally reaches the derailment point.

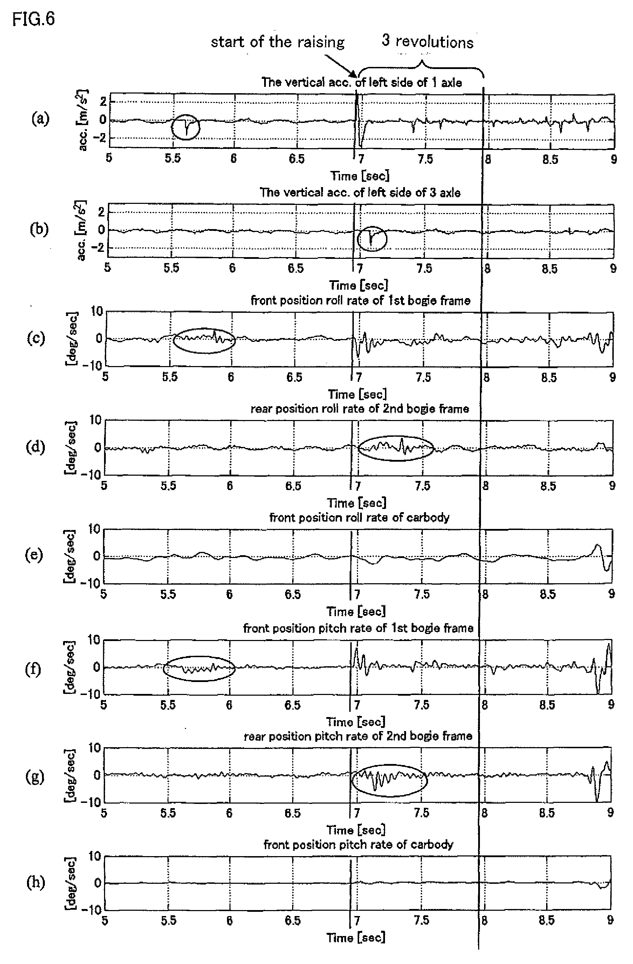

The result of having extracted data of 8CH from data of 56CH which it measured using the above described experimental vehicle is shown in FIG. 6 (a)∼ (h).

The experiment conditions for determining a derailing wheel are: a left side wheel of the first axle, the settled quantity of rise of the wheel is 3mm, speed is 0.9m , and the number of revolutions of the wheel before the quantity of rise becomes 3mm is 3 revolutions.

FIG. 6 (a) is a graph showing a change in the acceleration over time, the acceleration is measured by an acceleration sensor attached to the journal box on the left hand side of the first axle of the experimental vehicle: (b) is a graph showing a change in the acceleration over time, the acceleration is measured by an acceleration sensor attached to the journal box on the left hand side of the third axle of the experimental vehicle: (c) is a graph showing a change in the roll angular velocity over time, the roll angular velocity is measured by an angular velocity sensor attached to the front part of the first bogey frame of the experimental vehicle. (d) is a graph showing a change in the roll angular velocity over time, the roll angular velocity is measured by an angular velocity sensor attached to the rearward of the second bogey frame of the experimental vehicle. (e) is a graph showing a change in the roll angular velocity over time, the roll angular velocity is measured by an angular velocity sensor attached to the front part of the body of the experimental vehicle. (f) is a graph showing a change in the pitch angular velocity over time, the pitch angular velocity is measured by an angular velocity sensor attached to the front part of the first bogey frame of the experimental vehicle. (g) is a graph showing a change in the pitch angular velocity over time, the pitch angular velocity is measured by an angular velocity sensor attached to the rearward of the second bogey frame of the experimental vehicle. (h) is a graph showing a change in the pitch angular velocity over time, the pitch angular velocity is measured by an angular velocity sensor attached to the body of the experimental vehicle.

As shown in FIG. 6 (a), it can be seen that the vertically oriented acceleration increases greatly when the wheel on the left hand side of the first axle of the anterior chassis derails.

As shown in (b), when the wheel on the left hand side of the third axle passes, the movable unit has already returned to the original position, and the vertically oriented acceleration is small, the acceleration change due to the joint between the rails is detected.

As shown in (c), when the wheel on the left hand side of the first axle derails, it is recognized that the roll angular velocity of the first bogey frame increases.

As shown in (d), it is evident that the roll angular velocity does not increase, and the angular velocity change caused by the joint between the rails is detected.

As shown in (e), it is recognized that it is hard for a person to physically judge whether the change in the vertically oriented acceleration is caused by riding onto the rail or by the joint in the rail.

As shown in (f), it can be seen that the pitch angular velocity of the first bogey frame increases when the wheel on the left hand side of the first axle derails.

As shown in (g), it is evident that the pitch angular velocity does not increase and the angular velocity change due to the joint between the rails is detected.

And as shown in (h), when the sensors are attached to the body, it is recognize that it is hard to judge whether the change in the vertically oriented acceleration is caused by riding onto the rail or by the joint in the rail.

Further, in FIG. 6 (a) ∼ (h), the part which is surrounded by a round, it represents an acceleration and an angular velocity, these acceleration and angular velocity are detected when the vehicle passed the joint of the rail, and when it makes algorithm, these acceleration and angular velocity are process as a noise for preventing a false detection.

Also, in the present invention, both of the roll angle and pitch angle are regarded as factor, it can remove influence of Kant at the time of the curve run.

The above described derailment reproduction apparatus can reproduce various derailment conditions, in the present invention, 24 experiment conditions are set by combining four parameters.

The four parameters are, a speed of experimental vehicle, a derailing wheel, a settled quantity of rise of the wheel and a number of revolutions of the wheel before the quantity of rise.

And in the experiment, chosen 0.9m/s (equivalent to 10km/h of the real vehicle) and 1.3m/s (equivalent to 15km/h of the real vehicle) for speed of experimental vehicle, left side wheel of the first axle and the third axle for derailing wheel, 3mm and 10mm for quantity of rise of the wheel, 1 and 3 revolutions of the wheel before the quantity of rise.

The algorithm use to judge when derailment has been reached analyzed data of 56CH obtained from the above described experiment.
With run speed (V) as a parameter, change a multiplication time Δ t (V), a threshold θCR (V) of the chassis pitch angular velocity and a threshold ϕCR (V) which converted to multiplication time Δ t (V) of roll angular velocity of the chassis.

As shown in FIG. 7, inputs Δ t (V), θCR (V), ϕCR (V) into the computer of the vehicle beforehand, and measure a run speed (V), a pitch angular velocity θ (t), roll angular velocity ϕ(t) in real time, and judge as a potential for derailment when the pitch angular velocity θ (t) becomes greater than θCR (V), and the multiplication value of roll angular velocity ϕ (t) become greater than the threshold ϕCR (V).

In consideration of a faulty measurement and a false detection, the threshold is decided with a minimum of the physical quantity after riding onto the rail.

The relation of the threshold and the derailment determined in this way is shown in Fig. 8.

The condition of experiment is that the quantity of rise of the wheel on the left hand side of the first axle is 10mm, the vehicle speed is 0.9m/s, the rotation of the wheel before the quantity of wheel rise reaches 10mm is 1 revolution

From FIG. 8 (a), the following are understood, 7 seconds from the start of measurement the pitch angular velocity exceeds the threshold; 7.3 seconds from the start of measurement the quantity of rise of the wheel becomes 10mm; at this point in the process derailment is assumed.

Then, to explain the result of a derailment simulation of the riding rise of a real vehicle using simulation software.

A general commuter train is chosen as the vehicle model to examine the algorithmic effectiveness, and the vehicle model is a single vehicle.

A construction of the vehicle model, in three dimensional form, is shown in Table 1. -The mass and the inertial radius of each vehicle element is shown in Table 2.

A primary and secondary spring to tie these elements are comprised with a linear spring and damper.

These linear springs and dampers show restitution power in each axial direction of X (front and back direction of the vehicle), Y (lateral direction of the vehicle) and Z (vertical direction of the vehicle).

Also, sensors mounted on the chassis frame are used to measure a physical quantity which forms the base for the potential derailment detection algorithm.

**Table 1**

| The construction of the vehicle mode | |
|---|---|
| construction | bodyx1, chassis framex2, axis of the wheelx4 |
| distance between the axle [m] | 2.1 |
| distance between the chassis [m] | 6.9 |
| radius of the wheel [m] | 0.43 |
| height of the flange [mm] | 30 |
| distance of the rail [m] | 1.11 |

**Table 2**

| The parameter of each element of the vehicle | | | |
|---|---|---|---|
| | body | chassis frame | axis of the wheel |
| Mass m [kg] | 25970.0 | 3373.0 | 1485.0 |
| Inertial radius of the x direction rxx[m] | 1.500 | 0.680 | 0.600 |
| Inertial radius of the y direction ryy[m] | 5.900 | 0.540 | 0.240 |
| Inertial radius of the z direction rzz[m] | 5.900 | 0.910 | 0.600 |

When carrying out a derailment simulation, the input raising orbit shown in FIG. 9, FIG. 10 into simulation software, raise the wheel track of the first axis on the left side 40 mm.

In FIG. 9, FIG. 10, the horizontal axis indicates the position of the rail from the start point of the fourth axis, and the vertical axis indicates a displacement of the vertical direction of the rail which only the wheel track of the first axis of the left side passes.

The derailment of the vehicle depends on the speed of the vehicle and the speed of the riding rise.

Therein, set two driving conditions shown in the following (Table 3) as the simulation conditions for the riding rise of the vehicles.

**Table 3**

| Running conditionof the riding rise | | |
|---|---|---|
| | Condition 1 | Condition 2 |
| Speed(km/h) | 10 | 10 |
| Number of rotations of the axle | 3 | 1 |

Within the driving condition of Table 3, the result of condition 1 (the speed is 10km/h, the number of revolutions of the wheel is 3) is explained below as a representative example.

In the graph of FIG. 11, the horizontal axis indicates elapsed time from the wheel attached to the first axis of the left side starting its riding rise, and the vertical axis indicates a pitch angular velocity and a roll angular velocity multiplication value sequentially from the top. Herein, it calculates 0.2 (s) as being the multiplication time of the roll angular velocity.

The conditions in FIG. 11 simulated a slow derailment state, it is confirmed that the influence appears about each physical quantity from the start of the raising.

To set the algorithmic threshold, the simulation is performed under the conditions that the speed is 15 (km/h), number of revolutions is 3 (rev), that is, only the speed is increased in comparison with condition 1 (speed 10 (km/h), revolution 3 (rev)).

From the results of this simulation, it is confirmed that when the speed increases, the values of the roll angular velocity and the pitch angular velocity of the chassis frame also increase after riding onto the rail.

The upper and lower confusion does not affect the value of pitch angular velocity and roll angular velocity of the chassis frame.

In the system for detecting the potential for derailment, the threshold for the peak value of the pitch angular velocity and multiplication value of the roll angular velocity is set in the predetermined range thus preventing miscalculation and the detection of a potential derailment becomes possible.

Table 4 shows the set threshold as a result of this, these values are adjustable according to vehicle condition and driving condition.

**Table 4**

| Algorithmic threshold | |
|---|---|
| Multiplication value of the of the roll angular velocity | ±20[deg/s] |
| Peak value of the pitch angular velocity | ±0.1[deg/s] |

Applying the potential derailment detection algorithm using the set threshold in a simulation of a riding onto the rail.

The conditions of application being the highest speed for both running and rising, that is running speed is 15km/h and number of revolution is 1, the results are shown in Fig 12 and Fig 13.

The followings become clear from these figures, that it takes 0.65 seconds to complete a riding rise to 30mm, and that the potential for derailment is detected 0.05 seconds from the start of riding (only 7.7% of the total time). From this it can be seen that, even where the conditions for detecting a potential derailment are severe, It can detect a potential for derailment at a very early stage compared with the time of completion of riding (derailment is in a sham state).

Table 5 shows the time to completion for a 30mm riding rise, the time before detection from the start for the riding rise, and the ratio of the detection time to the completion of the riding rise for all driving conditions.

This Table 5 shows the results of the time to a 30mm riding rise, the detection time from the start of the riding rise, and the ratio of the time of the detection to the time of the riding rise completion. It can be seen from this table that, under all conditions, there is neither a false detection or a failure of detection, that the ratio between the time for detection and the time of completion for the riding rise is under 10%. Therefore, it can surely be said that it can detect and give warning of a potential derailment.

**Table 5**

| Detective time by the simulation | | | |
|---|---|---|---|
| Condition of the simulation | Time to 30mm riding rise[sec] | Detective time from the riding rise start[sec] | ratio of the time for detection to the time of completion for riding rise[%] |
| 10[km/h]-3revs | 2.30 | 0.12 | 5.2 |
| 10[km/h]-1rev | 0.95 | 0.07 | 7.4 |
| 15[km/h]-3revs | 1.54 | 0.05 | 3.3 |
| 15[km/h]-1rev | 0.65 | 0.05 | 7.5 |

Derailment simulations were carried out using a real scale vehicle. As a result, under all 4 conditions that changed the number of revolutions of the wheel and the speed up to the point of derailment, it was able to detect the potential derailment in less than 10% of the time to actual derailment.

From this, the effectiveness of the present system in ensuring the detection of potential derailments on real scale vehicles was clearly demonstrated.

As shown in FIG. 14, to detect a potential derailment, the system is constantly monitoring the acceleration and the angular velocity, and urgently operates the brakes when it is determined that the acceleration or angular velocity exceeded the threshold of the judgment algorithm.

And as shown in FIG. 15, the warning of an abnormality is shown on the monitor of the train, and indicates cancellation processing and hitting the brakes, when it is determined that the acceleration or angular velocity was less than the threshold of the judgment algorithm.

Also, as described above an early warning to the crew when potential for derailment is detected, enables subsequent measures, as shown in FIG. 16, spraying a friction regulator between a rail and wheels, or as shown in FIG. 17, It is conceivable of being conducted by active steerage using MPU.

### DESCRIPTION OF THE NUMERALS

1,11...chassis, 2...bogey frame, 3...first axle, 3a...wheel, 4...second axle, 12...bogey frame, 13...third axle, 14...fourth axle, 5...acceleration sensor, 6...angular velocity sensor, 20...body, 30...rail, 31...movable units, 31a, 31b, 31c, 31d...step surface, 32...linear slide, 40...draw unit, 41, 42...small roller, 43...caster.

## Claims

1. A method to detect a potential derailment **characterized in that** it comprises the following steps: to detect a pitch angle velocity and a roll angle velocity of a running chassis by a sensor attached to a frame of the chassis, and determine as a warning of potential derailment when multiplication value of the pitch angular velocity of the chassis is greater than the pre-set threshold, and when multiplication value of the roll angular velocity of the chassis is greater than the pre-set threshold.

2. A method to detect a potential derailment according to claim 1 comprising the following steps: to detect a pitch angle velocity and a roll angle velocity of a running chassis by a sensor attached to the journal box and frame of the chassis, and determine as warning of potential derailment when multiplication value of the pitch angular velocity of the chassis is greater than the pre-set threshold, and when multiplication value of the roll angular velocity of the chassis is greater than the pre-set threshold.

3. A method to detect a potential derailment according to claim 1 or 2, wherein a plurality of sensors are attached to the journal box or the frame of the chassis, and comprising the following step: adopt the maximum of the detection value of a plurality of sensors.

4. A method to detect a potential derailment according to claims 1 to 3, comprising the following steps: take a run speed as a parameter, change the threshold of the pitch angular velocity of the chassis and the multiplication threshold of the roll angular velocity of the chassis.

## Patentansprüche

1. Verfahren zum Detektieren einer potentiellen Entgleisung, **dadurch gekennzeichnet, dass** es die folgenden Schritte umfasst: eine Nickwinkelgeschwindigkeit und eine Rollwinkelgeschwindigkeit eines Laufchassis durch einen Sensor, der an einem Rahmen des Chassis angebracht ist, zu detektieren und als eine Warnung für potentielle Entgleisung zu bestimmen, wenn ein Vervielfachungswert der Nickwinkelgeschwindigkeit des Chassis größer als die voreingestellte Schwelle ist und wenn ein Vervielfachungswert der Rollwinkelgeschwindigkeit des Chassis größer als die voreingestellte Schwelle ist.

2. Verfahren zum Detektieren einer potentiellen Entgleisung nach Anspruch 1, das die folgenden Schritte umfasst: eine Nickwinkelgeschwindigkeit und eine Rollwinkelgeschwindigkeit eines Laufchassis durch einen Sensor, der an dem Radsatzlager und dem Rahmen des Chassis angebracht ist, zu detektieren und als eine Warnung für potentielle Entgleisung zu bestimmen, wenn ein Vervielfachungswert der Nickwinkelgeschwindigkeit des Chassis größer als die voreingestellte Schwelle ist und wenn ein Vervielfachungswert der Rollwinkelgeschwindigkeit des Chassis größer als die voreingestellte Schwelle ist.

3. Verfahren zum Detektieren einer potentiellen Entgleisung nach Anspruch 1 oder 2, wobei eine Vielzahl von Sensoren an dem Radsatzlager oder dem Rahmen des Chassis angebracht ist, und das den folgenden Schritt umfasst: Anpassen des Maximums des Detektionswerts von einer Vielzahl von Sensoren.

4. Verfahren zum Detektieren einer potentiellen Entgleisung nach Ansprüchen 1 bis 3, das die folgenden Schritte umfasst: Nehmen einer Laufgeschwindigkeit als ein Parameter, Ändern der Schwelle der Nickwinkelgeschwindigkeit des Chassis und der Vervielfachungsschwelle der Rollwinkelgeschwindigkeit des Chassis.

## Revendications

1. Procédé de détection d'un déraillement potentiel **caractérisé en ce qu'**il comprend les étapes suivantes : détecter une vitesse angulaire d'inclinaison longitudinale et une vitesse angulaire d'inclinaison latérale d'un châssis en déplacement par le biais d'un capteur fixé à un cadre du châssis, et déterminer, en tant qu'avertissement de déraillement potentiel, lorsque la valeur de multiplication de la vitesse angulaire d'inclinaison longitudinale du châssis est supérieure au seuil prédéfini, et lorsque la valeur de multiplication de la vitesse angulaire d'inclinaison latérale du châssis est supérieure au seuil prédéfini.

2. Procédé de détection d'un déraillement potentiel selon la revendication 1 comprenant les étapes suivantes : détecter une vitesse angulaire d'inclinaison longitudinale et une vitesse angulaire d'inclinaison latérale d'un châssis en déplacement par le biais d'un capteur fixé à la boîte d'essieu et au cadre du châssis, et déterminer, en tant qu'avertissement de déraillement potentiel, lorsque la valeur de multiplication de la vitesse angulaire d'inclinaison longitudinale du châssis est supérieure au seuil prédéfini, et lorsque la valeur de multiplication de la vitesse angulaire d'inclinaison latérale du châssis est supérieure au seuil prédéfini.

3. Procédé de détection d'un déraillement potentiel selon la revendication 1 ou 2, dans lequel une pluralité de capteurs sont fixés à la boîte d'essieu ou au cadre du châssis, et comprenant l'étape suivante : adopter le maximum de la valeur de détection d'une pluralité de capteurs.

4. Procédé de détection d'un déraillement potentiel selon les revendications 1 à 3, comprenant les étapes suivantes : prendre une vitesse de déplacement en tant que paramètre, modifier le seuil de la vitesse angulaire d'inclinaison longitudinale du châssis et le seuil de multiplication de la vitesse angulaire d'inclinaison latérale du châssis.
